# FASCICULE DE BREVET EUROPEEN

(11) **EP 4 548 041 B1**
(45) Date de publication et mention de la délivrance du brevet: **27.05.2026**
(21) Numéro de dépôt: 23744205.8
(22) Date de dépôt: 20.06.2023
(51) Int. Cl.: G01B 11/245, G06T 7/62, G01B 11/06, G01S 17/88, G06Q 10/08

(54) **SYSTÈME DE DÉTERMINATION DU VOLUME ET DE LA SURFACE DE PLANCHER LIBRE DANS UNE ZONE DE CHARGEMENT ET PROCÉDÉ DE COMMANDE CORRESPONDANT**
SYSTEM ZUR BESTIMMUNG DES VOLUMENS UND DES FREIEN BODENBEREICHS IN EINER LADEZONE SOWIE ZUGEHÖRIGES STEUERUNGSVERFAHREN
SYSTEM FOR DETERMINING THE VOLUME AND THE FREE FLOOR AREA IN A LOADING ZONE AND CORRESPONDING CONTROL METHOD

(30) Priorité: 30.06.2022 FR 2206661
(43) Date de publication de la demande: 07.05.2025
(73) Titulaire: Innovaction Technologies, 42110 Epercieux St Paul (FR)
(72) Inventeur: SAJNOVIC, Srecko, 42300 ROANNE (FR); THOMAS, Hugo, 42110 FEURS (FR)
(74) Mandataire: Casalonga
(86) Numéro de dépôt international: PCT/FR2023/050917
(87) Numéro de publication internationale: WO 2024/003485

(56) Documents cités:
- US-A1- 2019 114 577
- US-A1- 2021 348 914
- US-A1- 2022 003 872

## Description

### Domaine technique

L'invention a pour domaine technique la mesure du remplissage d'une zone de chargement, et plus particulièrement la mesure du remplissage d'une benne ou remorque d'un camion ou des soutes d'un navire.

### Techniques antérieures

De l'état de la technique antérieure, on connait les documents EP 3534332 et US 2017/0228885 divulguant la mesure du volume de cargaison transitant sur un quai de chargement ou à travers l'entrée d'une remorque de camion en fonction d'une mesure des cargaisons entrant dans la remorque et des cargaisons sortant de la remorque.

La détermination du volume occupé dans la remorque ne permet pas de déterminer la surface de plancher disponible. Or, c'est bien la surface de plancher disponible qui permet de déterminer si de nouvelles cargaisons peuvent être ajoutées dans la remorque. En effet, les nouvelles cargaisons, notamment sous forme de palettes, ne peuvent être disposées sur des cargaisons déjà présentes dans la remorque. Les ajouts ne peuvent donc se faire que sur une partie de plancher libre de cargaisons.

Par ailleurs, les cargaisons chargées dans une remorque peuvent présenter des formes et hauteurs différentes. Les méthodes avec des dispositifs d'acquisition disposés à des emplacements fixes ne permettent pas de déterminer la surface de plancher disponible du fait des effets d'ombre et de masquage entre les cargaisons de formes différentes. Les dispositifs d'acquisition sont généralement des caméras optiques ou des LIDARs (acronyme anglophone pour « LIght Detection And Ranging ») à trois dimensions ayant pour point commun de présenter un grand angle d'ouverture.

Il n'existe pas de dispositif permettant de déterminer la surface de plancher dans une remorque de façon fiable et systématique.

Du document US2014244098, on connait également la mesure du volume d'une benne d'un camion en fonction de la mesure de la masse ajoutée dans le véhicule divisée par la masse volumique des matières ajoutées.

Si une telle méthode convient pour des chargements homogènes, il n'en est plus le cas dès lors que les matières ajoutées dans la benne sont hétérogènes. C'est notamment le cas dans les exploitations minières, par exemple pour des mélanges de terre et de minerais.

US 2019/0114577 A1 décrit un système de détermination de la surface de plancher libre d'une zone de chargement comprenant des capteurs LIDAR de hauteur fixés sur le plafond d'une remorque et dirigés vers le plancher de la zone de chargement et des moyens de traitement pour déterminer la surface libre de plancher à partir des mesures réalisées par les capteurs.

Par ailleurs, le remplissage d'une benne est généralement le résultat d'une décision de l'opérateur en charge du chargement, quant à la quantité de matière à ajouter. L'estimation de la masse totale transportée par l'intermédiaire d'une masse volumique moyenne ne permet que de détecter les surcharges du camion par rapport au poids total en charge autorisé. Il ne permet pas d'optimiser le remplissage de la benne notamment pour les cargaisons les moins denses.

Il n'existe pas de dispositif permettant de déterminer le volume disponible dans une benne ou remorque, de façon fiable et systématique.

### Exposé de l'invention

L'invention a pour objet un système de détermination de la surface de plancher libre d'une zone de chargement, comprenant des moyens d'entrainement, des moyens de communication, des moyens de traitement et une rampe mobile sur laquelle sont disposés des capteurs de hauteur dirigés vers le plancher de la zone de chargement selon une incidence normale et alignés entre eux à une hauteur constante dudit plancher, la rampe mobile étant conçue de sorte à s'étendre selon une première direction au-dessus de la zone de chargement et étant configurée de sorte à se déplacer au-dessus de la zone de chargement sous l'effet des moyens d'entrainement selon une deuxième direction, les moyens de traitement étant configurés pour déterminer la surface libre de plancher de la zone de chargement en fonction des données reçues des capteurs de hauteur par l'intermédiaire des moyens de communication.

La rampe mobile peut être munie d'au moins un capteur de profondeur, alimenté par les moyens d'alimentation, et configuré pour déterminer la distance au côté opposé de la zone de chargement, les moyens de communication comprennent une connexion avec chaque capteur de profondeur.

Les moyens de communication peuvent comprendre une connexion sans fil avec un moyen local de stockage de données disposé sur la rampe mobile et connecté aux capteurs de hauteur et, lorsqu'ils sont présents, aux capteurs de profondeur, de sorte à transmettre les données acquises par les capteurs lorsque la rampe mobile a terminé de balayer la zone de chargement.

Les capteurs de hauteur et les capteurs de profondeur peuvent être des capteurs de distance à faible angle d'ouverture, de préférence des LIDARs.

Les moyens d'entrainement peuvent comprendre au moins deux cordes circulant chacune sur une poulie d'extrémité, vers une poulie de tension par l'intermédiaire d'une poulie de renvoi d'angle, la deuxième corde étant croisée par l'intermédiaire d'une poulie intermédiaire, les deux cordes étant mises en mouvement par l'intermédiaire d'un galet d'entrainement mis en rotation par un moyen d'entrainement.

Le système de détermination peut être muni de moyens d'alimentation peuvent comprendre une batterie alimentant les moyens d'entrainement, les moyens de communication et les moyens de traitement, une batterie locale disposée sur la rampe mobile et un système de transmission de puissance sans contact configuré pour recharger la batterie locale de la rampe mobile, une batterie locale étant configurée pour alimenter les capteurs de hauteur ainsi que les capteurs de profondeur lorsque le système de détermination en est muni.

La zone de chargement peut être située dans un camion, dans la benne d'un camion, dans une remorque d'un camion, dans un navire, dans un wagon ferroviaire, dans un aéronef, ou dans un bâtiment.

L'invention a également pour objet un procédé de commande d'un système de détermination tel que décrit ci-dessus, comprenant les étapes suivantes :
on commande les capteurs de hauteur de sorte à réaliser l'acquisition de mesures,
on date chaque mesure reçue en fonction d'une horloge interne,
on commande le moyen d'entrainement de sorte que la rampe se mette en mouvement et on mémorise l'instant de début de déplacement de la rampe,
on détermine parmi les mesures reçues, celles dont la date est comprise entre la date de début de déplacement de la rampe et la date de fin de déplacement de la rampe égale à la somme de la date de début de déplacement de la rampe et de la durée de déplacement de la rampe,
pour chaque mesure d'un capteur de hauteur, on définit alors une coordonnée longitudinale comme la position longitudinale du capteur au moment de la mesure, on définit la coordonnée transverse comme la distance entre le capteur de hauteur dont la mesure est traitée et le premier capteur de hauteur de la rampe et on définit la coordonnée de hauteur comme la différence entre la hauteur sous plafond de la remorque moins la mesure de hauteur du capteur de hauteur,
on détermine la surface de plancher libre dans la zone de chargement, et au moins l'un parmi le volume libre dans la zone de chargement, la surface de plancher occupée dans la zone de chargement, le volume occupé dans la zone de chargement, une cartographie de la surface de plancher libre comme une image fonction des points dont la coordonnée de hauteur est inférieure à un seuil prédéterminé ou une cartographie de la surface de plancher occupée comme une image fonction des points dont la coordonnée de hauteur est supérieure audit seuil prédéterminé.

On peut déterminer la position longitudinale d'un capteur à une date mémorisée comme la vitesse de déplacement moyenne de la rampe multipliée par la différence entre la date mémorisée et la date de début de déplacement de la rampe.

On peut commander au moins un capteur de profondeur de sorte à réaliser l'acquisition de mesures et on détermine la position longitudinale d'un capteur en fonction de la mesure de distance d'un premier capteur de profondeur dirigé vers un côté de la zone de chargement normal à la direction de déplacement de la rampe mobile.

On peut déterminer l'instant de début de déplacement de la rampe de capteurs comme l'instant de commande des moyens d'alimentation afin d'alimenter le moyen d'entrainement.

On peut commander l'acquisition de mesures d'un capteur de courant configuré de sorte à mesurer le courant d'alimentation du moyen d'entrainement, et on détermine l'instant de début de déplacement de la rampe de capteur lorsque le courant d'alimentation du moyen d'entrainement dépasse un seuil de courant prédéterminé.

Pour des cargaisons conditionnées, on peut associer une surface élémentaire à chaque point dont la coordonnée de hauteur est inférieure au seuil prédéterminé, la surface élémentaire étant égale au produit de la distance entre deux capteurs de hauteur selon une première direction normale au déplacement de la rampe mobile et de la distance entre deux mesures successives selon une deuxième direction colinéaire au déplacement de la rampe mobile, puis on peut déterminer la surface de plancher disponible en sommant les surfaces élémentaires, et on peut déterminer le volume disponible en multipliant la surface de plancher disponible par la hauteur de la zone de chargement.

Pour des cargaisons conditionnées, on peut déterminer une surface élémentaire englobant plusieurs points de mesure, on moyenne les mesures sur chaque surface élémentaire, on détermine les surfaces élémentaires pour lesquelles la coordonnée de hauteur moyenne est inférieure au seuil prédéterminé, puis on peut déterminer la surface de plancher disponible en sommant les surfaces élémentaires pour lesquelles la coordonnée de hauteur moyenne est inférieure au seuil prédéterminé, et on peut déterminer le volume disponible en multipliant la surface de plancher disponible par la hauteur de la zone de chargement.

Le seuil prédéterminé peut être défini comme étant inférieur à une taille minimale des cargaisons.

Pour des cargaisons en vrac, on peut déterminer le volume disponible comme le volume de la zone de chargement moins le volume occupé par la cargaison déterminé par intégration des mesures de capteur de hauteur selon la première direction et selon la deuxième direction.

On peut déterminer une surface de plancher occupé ou un volume occupé en fonction des points de mesure dont la coordonnée de hauteur est supérieure au seuil prédéterminé.

De par sa mesure de hauteur en incidence normale par rapport au plancher de la remorque d'un camion, le système de détermination permet de résoudre les déficiences de l'état de la technique antérieure et permettant de déterminer aussi bien la surface de plancher disponible dans une remorque de camion ou dans la soute d'un navire marchand que le volume disponible dans une benne de camion ou dans une soute de vrac de navire marchand.

### Brève description des dessins

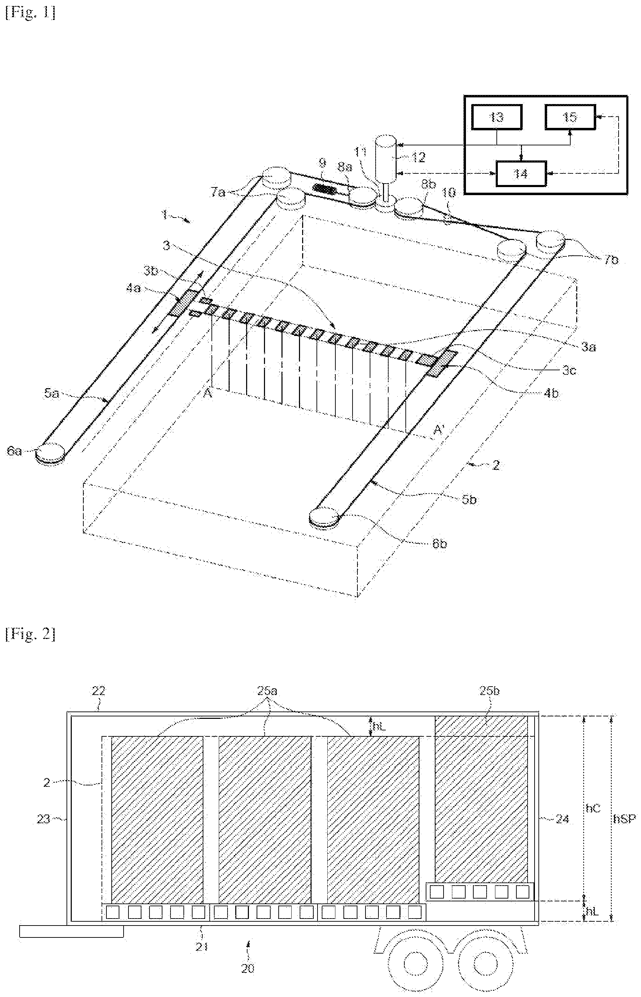

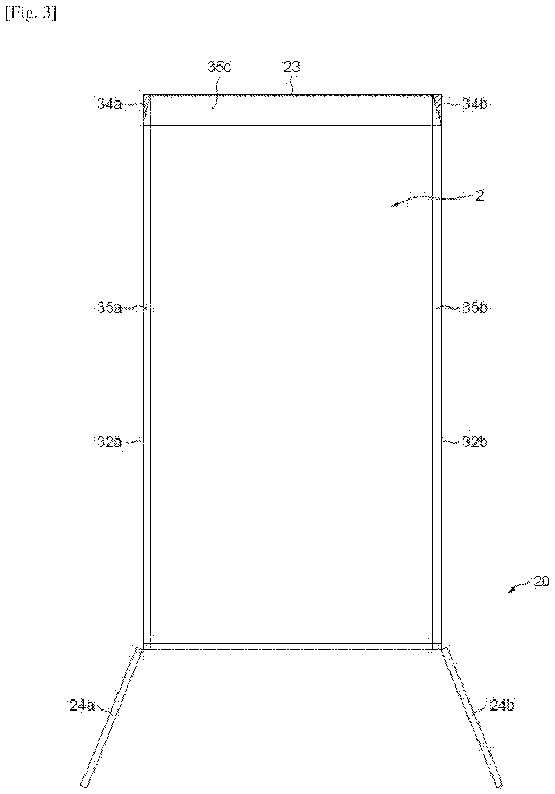

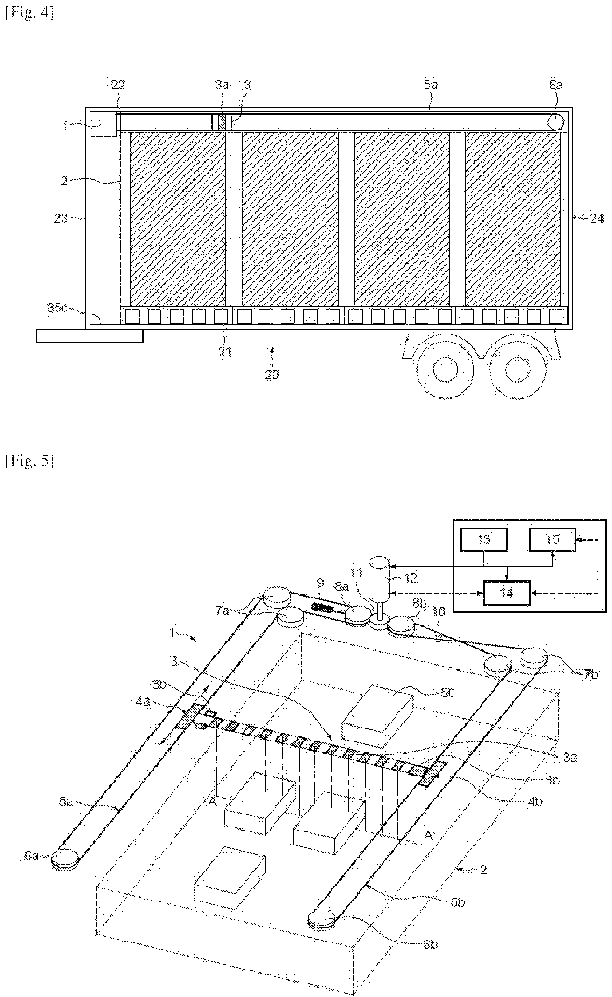

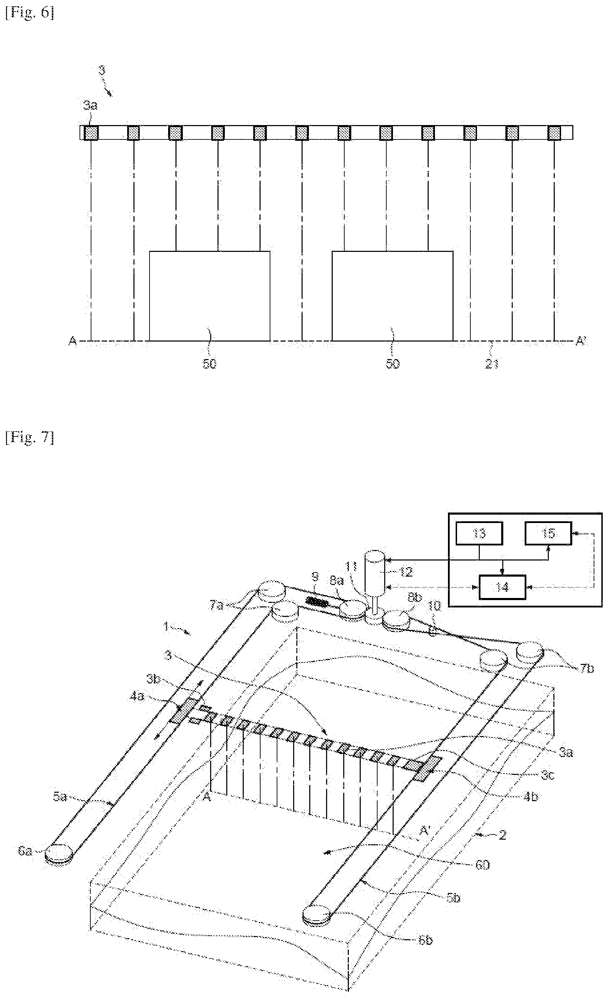

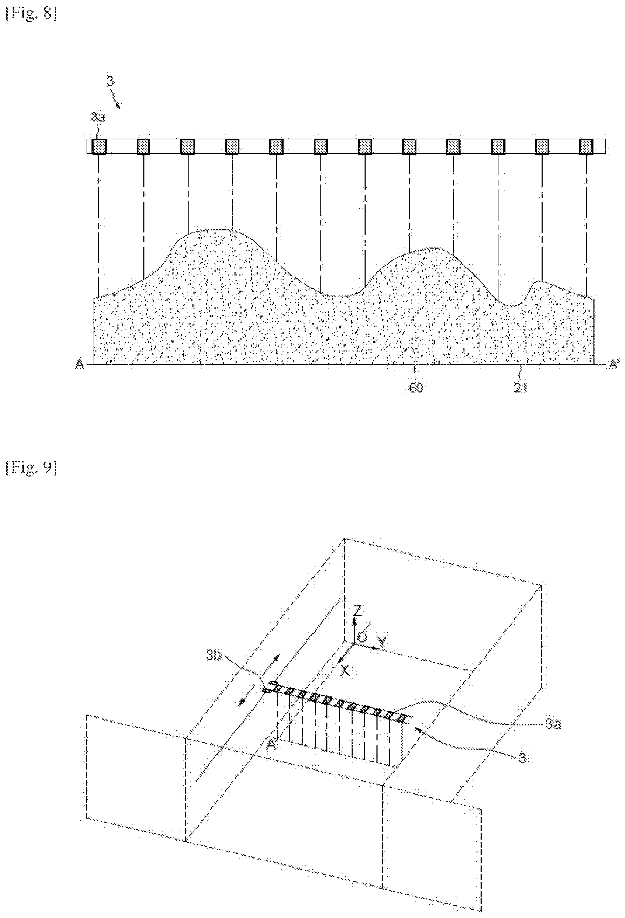

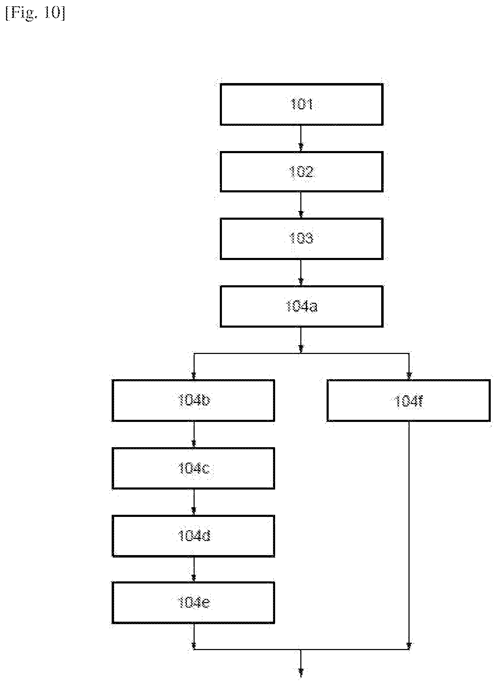

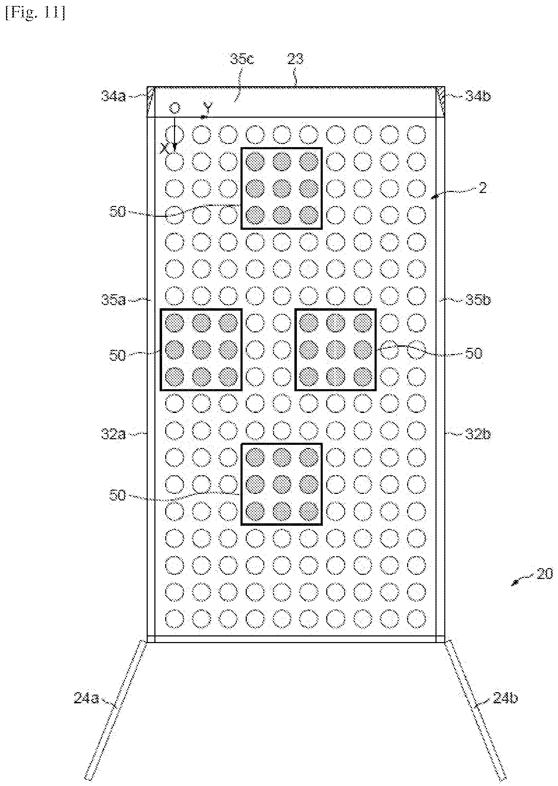

D'autres buts, caractéristiques et avantages de l'invention apparaîtront à la lecture de la description suivante, donnée uniquement à titre d'exemple non limitatif et faite en référence aux dessins annexés sur lesquels :
- la figure [Fig 1] illustre les principaux éléments d'un système de détermination selon l'invention,
- les figures [Fig 2] et [Fig 4] illustrent une vue en coupe longitudinale d'une remorque lors du chargement de palettes,
- la figure [Fig 3] illustre une vue en coupe de dessus d'une remorque de camion illustrant la disposition de la zone de chargement,
- les figures [Fig 5] et [Fig 6] illustrent la mesure de surface de plancher et du volume disponible pour des cargaisons conditionnées,
- les figures [Fig 7] et [Fig 8] illustrent la mesure de volume disponible pour des cargaisons en vrac,
- la figure [Fig 9] illustre la disposition d'un repère mathématique pour la détermination de la surface de plancher et du volume libres d'une zone de chargement,
- la figure [Fig 10] illustre les principales étapes d'un procédé de commande selon l'invention,
- la figure [Fig 11] illustre le résultat de la détermination de la surface de plancher libre dans une remorque.

### Description détaillée

Le système de détermination de la surface de plancher ou du volume disponible dans une zone de chargement, lorsqu'une telle zone de chargement est située dans une remorque, est illustré sur la figure [Fig 1].

On définit une zone de chargement comme le volume dans lequel des cargaisons conditionnées ou des cargaisons en vrac peuvent être ajoutées ou retirées. Généralement, une zone de chargement présente une forme parallélépipédique définie par un plancher, deux cotés opposés, deux cotés adjacents aux côtés opposés et, un plafond. On comprendra toutefois que l'invention n'est pas limitée à une zone de chargement parallélépipédique de sorte que d'autres formes peuvent être prises en compte, notamment cylindrique, pyramidal, prismatique, ... Des formes discrètes comprenant des casiers peuvent également être analysées par le système de détermination.

Le système de détermination 1, positionné au-dessus et autour d'une zone de chargement 2, comprend une rampe mobile 3 sur laquelle sont disposés des capteurs 3a de hauteur, reliée par chacune de ses extrémités à un curseur 4a,4b. Dans un mode de réalisation, la rampe mobile 3 comprend également des capteurs 3b de profondeur. Les capteurs 3a de hauteur et les capteurs 3b de profondeur sont des capteurs de distance à faible angle d'ouverture, de préférence des LIDARs.

Les capteurs 3a de hauteur sont disposés de sorte à être dirigés vers le plancher de la zone de chargement (le plancher de la remorque) selon une incidence normale, tout en étant alignés entre eux et à une hauteur constante du plancher de la zone de chargement. Une telle disposition permet de limiter les effets d'ombre ou de masquage par les cargaisons chargées.

Les capteurs 3b de profondeur sont disposés de sorte à ce que l'un au moins soit dirigé vers un côté de la zone de chargement normal à la direction de déplacement de la rampe mobile (le fond de la remorque), un autre au moins étant dirigé vers le côté opposé de la zone de chargement normal à la direction de déplacement de la rampe mobile (les portes de la remorque), la direction des capteurs 3b de profondeur étant normale à la direction de déplacement de la rampe mobile, et, par construction, au fond de remorque. Dans un cas particulier, un tel ensemble d'au moins un capteur 3b de profondeur dirigé dans une direction et au moins un capteur 3b de profondeur dirigé dans une direction opposée est disposé de chaque côté de la rampe 3 de capteurs, au plus près des curseurs 4a,4b.

Les capteurs 3a,3b sont alimentés électriquement par une batterie locale 3c.

Chaque curseur 4a,4b est conçu de sorte à supporter la rampe mobile 3 et à circuler dans un rail d'écoute non illustré. Chaque curseur 4a,4b est entrainé en mouvement par une corde 5a,5b contenue dans un rail d'écoute. Le système de détermination 1 ainsi constitué est contenu dans un volume vertical réduit, délimité par les rails d'écoute.

Le système de détermination 1 comprend des moyens d'entrainement permettant de déplacer les cordes 5a,5b afin de mettre la rampe mobile 3 en mouvement vers un premier côté de la zone de chargement, normal à la direction de déplacement de la rampe mobile ou vers le côté opposé. Dans le cas d'une remorque, le premier côté est à proximité du fond de remorque, le côté opposé étant à côté des portes de la remorque. Chaque corde 5a,5b circule sur une poulie d'extrémité 6a,6b, vers une poulie de tension 8a,8b par l'intermédiaire d'une poulie de renvoi d'angle 7a,7b.

La première poulie de tension 8a est reliée à un ressort 9 exerçant sur la poulie une force contraire à la force de traction résultant de la tension de la corde. La première corde 5a est ainsi maintenue en tension.

La deuxième corde 5b est quant à elle croisée par l'intermédiaire d'une poulie intermédiaire 10 avant de circuler sur la poulie de tension 8b. La deuxième poulie de tension 8b est, elle aussi, reliée à un ressort (non illustré) comme la première poulie de tension 8a.

Un galet d'entrainement 11 relié à un moyen d'entrainement 12 commandé, notamment un moteur électrique, est disposé entre la première corde 5a et la deuxième corde 5b au niveau respectivement des première et deuxième poulies d'entrainement 8a,8b. de sorte à entrainer simultanément les deux cordes par contact. D'autres dispositifs pourraient être employés, notamment un entrainement direct des poulies d'entrainement 8a,8b. Un dispositif de débrayage (non illustré) est également présent et permet d'écarter les poulies d'entrainement 8a,8b afin de rompre le contact avec le galet d'entrainement 11, notamment lors des opérations de maintenance.

Le système de détermination comprend une unité de commande électronique munie de moyens d'alimentation 13, de moyens de communication 14 et de moyens de traitement 15.

Les moyens d'alimentation 13 permettent d'alimenter le moyen d'entrainement 12 et la batterie locale 3c de la rampe 3. Il s'agit généralement d'une batterie et de moyens de commutation commandés par les moyens de traitement 15 et connectés au moyen d'entrainement 12 directement ou par l'intermédiaire d'un régulateur de tension ou de puissance. Dans certaines applications particulières, un générateur peut également être prévu pour recharger la batterie, notamment des cellules photovoltaïques ou un système de freinage récupératif au niveau des essieux de la remorque. Le générateur peut également être une batterie ou un alternateur disposé dans le véhicule comprenant la zone de chargement ou tirant une remorque comprenant la zone de chargement.

Dans un mode de réalisation, les moyens d'alimentation 13 sont aussi munis d'un système de transmission de puissance électrique sans contact, notamment un système de charge inductive, de sorte à pouvoir charger la batterie locale 3c alimentant les capteurs 3a,3b de la rampe 3 de capteurs, lorsque les moyens d'entrainement sont à l'arrêt. La rampe 3 est alors de conception plus simple car il n'est pas nécessaire de prévoir un câble d'alimentation et des moyens de guidage dudit câble d'alimentation lors du déplacement de la rampe 3.

Les moyens de communication 14 sont alimentés par les moyens d'alimentation 13 et connectés à chaque capteur 3a,3b ainsi qu'aux moyens d'alimentation 13. La connexion avec les capteurs 3a,3b est une connexion filaire ou sans fil, de préférence de type wifi, bluetooth, .... Comme pour le système de transmission puissance électrique sans contact, une connexion sans fil permet une conception plus simple de la rampe 3 car il n'est pas nécessaire de prévoir de câbles de connexion de données et de moyens de guidage dudit câble de connexion de données lors du déplacement de la rampe 3. Dans le cas particulier d'une connexion sans fil, les moyens de communication 14 comprennent un moyen local de stockage de données disposé sur la rampe mobile 3 et par l'intermédiaire duquel transitent les données des capteurs 3a,3b. Le moyen local de stockage de données mémorise les données acquises par les capteurs 3a,3b jusqu'à ce que la rampe mobile ait terminé le balayage de la zone de chargement. Les données mémorisées sont alors transmises au moyen de traitement 15.

La connexion avec les moyens d'alimentation 13 permettent de transmettre des commandes à l'alimentation du moyen d'entrainement 12 depuis les moyens de traitement 15 et/ou de transmettre les mesures de courant d'alimentation du moyen d'entrainement 12 à destination des moyens de traitement 15.

Les moyens de communication 14 comprennent également une connexion à un réseau de téléphonie mobile ou un réseau de téléphone satellitaire permettant de transmettre la surface de plancher libre ou le volume libre.

Les moyens de traitement 15, tel qu'un processeur associé à de la mémoire, sont reliés aux moyens de communication 14 par une connexion de données, notamment un bus de données CAN, et alimentés électriquement par les moyens d'alimentation 13.

Dans le cas particulier des remorques de camion, la remorque est chargée soit par transpalette soit par chariot élévateur. Ces engins permettent de soulever les palettes pour les déplacer et les charger. Il en résulte que les palettes chargées dans la remorque présentent une hauteur limitée à la hauteur sous plafond de la remorque moins la hauteur de levage. La hauteur de levage est généralement de 10cm. D'autres hauteurs peuvent cependant être envisagées.

La figure [Fig 2] illustre une vue en coupe d'une remorque lors du chargement de cargaisons sur palettes. La remorque 20 comprend un plancher 21, un plafond 22, un fond de remorque 23 et des portes 24. La figure [Fig 2] illustre également des cargaisons sur palette 25a chargées et une cargaison sur palette 25b en cours de chargement. Les engins de levage permettant de lever la cargaison sur palette 25b ne sont pas représentés par soucis de clarté.

La figure [Fig 2] illustre bien que la hauteur limite de cargaison hC est égale à la hauteur sous plafond de la remorque hSP moins la hauteur de levage hL. Une fois les cargaisons chargées, un espace libre de hauteur au moins égale à la hauteur limite hL se retrouve ainsi au-dessus de chaque cargaison chargée 25a. En d'autres termes, la zone de chargement 2 présente une hauteur égale à la hauteur limite de cargaison hC lorsque la cargaison est disposée sur le plancher de la zone de chargement.

Grace au volume vertical réduit requis par le système de détermination 1, il est alors possible de disposer le système de détermination au contact du plafond de la remorque dans l'espace libre disponible au-dessus de chaque cargaison.

La figure [Fig 3] illustre une vue en coupe de dessus d'une remorque 20 de camion, comprenant deux portes 24a,24b, deux parois latérales 32a,32b et une paroi de fond de remoque 23.

Une remorque 20 présente une forme généralement parallélépipédique. Néanmoins, à proximité de la paroi de fond de remorque 23, la remorque présente une forme prismatique résultant du retrait de zones à base triangulaire 34a,34b. On a recours à une telle forme prismatique et au retrait des zones à base triangulaire 34a,34b afin de conserver le rayon de braquage du tracteur tirant la remorque. En effet, le tracteur est généralement disposé au plus près du fond de remorque afin de gagner en compacité, aérodynamisme et afin de de faciliter la connexion des câbles électriques et pneumatiques entre le tracteur et la remorque.

Il découle de cette forme du fond de remorque, que la zone utile au chargement de cargaisons, définie ci-dessus comme étant la zone de chargement, est restreinte par rapport à la surface de plancher de la remorque. La zone de chargement 2 est limitée en profondeur au niveau de la paroi de fond de remorque de la profondeur des zones à base triangulaire 34a,34b, et au niveau des portes 24a,24b de l'épaisseur des portes. La zone de chargement 2 est limitée en largeur de chaque côté par la largeur de chacune des zones à base triangulaire 34a,34b.

On définit alors une surface libre égale à la surface de la remorque moins la surface de la zone de chargement, comprenant une première surface 35a au contact d'une première paroi latérale 32a, une deuxième surface 35b au contact d'une deuxième paroi latérale 32b et une troisième surface 35c au contact du fond de remorque 23.

Au vu de la figure [Fig 3], on comprendra que les capteurs 3b de profondeur sont préférentiellement disposés au plus près des curseurs 4a,4b mais en regard de la paroi 23 du fond de remorque disposée entre les deux zones à base triangulaire 34a,34b. Une telle disposition permet de ne pas avoir à retraiter les mesures des capteurs 3b de profondeur pour compenser la différence de profondeur entre le point de mesure sur la surface tronquée entre la paroi de fond de remorque 23 et les parois latérales 32a,32b.

La figure [Fig 4], est identique en tous points à la figure [Fig 2] mais illustre en plus l'espace libre en fond de remorque correspondant à la troisième surface libre 35c de la figure [Fig 3].

Le système de détermination 1 est disposé dans le volume libre s'étendant selon une direction normale à la surface libre de la remorque jusqu'au plafond de la remorque. Les rails d'écoute et les poulies 6a,6b,7a,7b étant situés dans les volumes correspondant aux première et deuxième surfaces 35a,35b, les moyens d'entrainement 8a,8b,9,10,11,12, les moyens de d'alimentation 13, les moyens de communication 14, les moyens de traitement 15 et la rampe mobile 3 au repos (c'est-à-dire lorsqu'aucune mesure n'est réalisée) étant disposés dans le volume libre correspondant à la troisième surface 35c. En d'autres termes, le système de détermination 1 est disposé dans le volume libre s'étendant de part et d'autre de la zone de chargement tout en restant compris dans la hauteur de la zone de chargement.

Lors de la mesure, chaque capteur 3a de hauteur mesure la distance entre la rampe 3 de capteurs et, soit une cargaison conditionnée 50, soit la cargaison 60 en vrac, soit le plancher 21 de la zone de chargement. On comprendra que d'autres formes de conditionnement peuvent être pris en compte à la place d'une palette. On citera par exemple des bidons, des cartons, ...

Les figures [Fig 5] et [Fig 6] illustrent la mesure de surface de plancher et du volume disponible pour des cargaisons conditionnées, telles des palettes, bidons ou cartons.

La rampe 3 est déplacée sur la longueur de la zone de chargement alors que les capteurs 3a de hauteur réalisent des acquisitions de valeurs. Les hauteurs mesurées dépendent de la présence ou de l'absence de cargaison 50,60, et lorsqu'une cargaison 50,60 est présente, de sa hauteur.

La surface de plancher disponible est déterminée en comparant les points mesurés à un seuil prédéterminé.

Le volume disponible est alors déterminé en multipliant la surface de plancher disponible par la hauteur limite de cargaison hC définie en figure [Fig 2].

Les figures [Fig 7] et [Fig 8] illustrent la mesure de volume disponible pour des cargaisons en vrac.

La rampe 3 est déplacée sur la longueur de la zone de chargement alors que les capteurs 3a de hauteur réalisent des acquisitions de valeurs. Les hauteurs mesurées dépendent de la quantité de cargaison à chaque point de mesure.

Pour de telles cargaisons, la détermination de surface de plancher disponible n'est pas pertinente. On détermine alors directement le volume occupé, en réalisant une intégration de la hauteur mesurée selon la largeur et la longueur de la zone de chargement. Une intégration selon la largeur de la zone de chargement est illustrée par la figure [Fig 8]. On détermine ensuite le volume disponible par différence entre le volume total de zone de chargement et le volume occupé déterminé.

Sur la figure [Fig 7], on comprendra que la surface de la cargaison en vrac varie plus moins entre chaque pas de mesure, en fonction de la nature de la cargaison. Le sable aura tendance à présenter de plus faibles différences de niveau que des rochers.

En préambule de la présentation des principales étapes du procédé de commande, on définit un repère (O,x,y,z), dans lequel l'origine O est fixée dans le coin gauche à la jonction entre le plancher et deux cotés adjacents de la zone de chargement. Dans une remorque, un tel repère implique que le plan (O,x,z) comprend le premier capteur 3a de hauteur de la rampe 3. La figure [Fig 9] illustre un tel repère. La direction longitudinale x est colinéaire à la longueur de la remorque, croissant du fond de remorque vers les portes de la remorque. La direction transverse y est colinéaire à la largeur de la remorque, croissant de la gauche vers la droite. La direction z de hauteur est collinaire à la hauteur de la remorque, croissant du plancher vers le plafond. Un autre repère pourrait être choisi. Néanmoins, le repère décrit ci-dessus permet de simplifier les calculs décrits plus bas dans le cas d'un balayage de la zone de chargement dans la direction de coordonnées longitudinales croissantes et une identification croissante des capteurs 3a de hauteur dans la direction de coordonnées transverses croissantes. Le repère décrit doit être adapté ou les calculs modifiés si un déplacement différent est considéré ou si une identification différente des capteurs 3a de hauteur est envisagée.

Ces déterminations vont maintenant être précisées dans le cadre de la description du procédé de commande, comprenant les étapes illustrées par la figure [Fig 10].

Le procédé de commande du système de détermination 1 est stocké dans au moins une mémoire des moyens de traitement 15, et exécuté par le processeur des moyens de traitement 15.

Au cours d'une première étape 101, on commande les capteurs 3a de hauteur et les capteurs 3b de profondeur de sorte à réaliser l'acquisition de mesures. Chaque capteur 3a de hauteur et chaque capteur 3b de profondeur est muni d'un boitier dans lequel est ménagé un objectif ou une ouverture selon la technique de mesure employée. La mesure de hauteur ou de profondeur est alors réalisée de façon normale à la surface du boitier à travers l'objectif ou l'ouverture. Chaque capteur 3a de hauteur et chaque capteur 3b de profondeur émet une distance mesurée associée à un identifiant permettant de différencier chaque capteur sur la rampe 3. Les données des capteurs sont reçues par le moyen de communication 14 et transmises au moyen de calcul 15. Le moyen de calcul 15 stocke en mémoire chaque mesure reçue en l'associant à l'identifiant du capteur correspondant et à l'instant de réception déterminé en fonction d'une horloge interne. Une telle horloge est notamment comprise de façon logicielle ou matérielle dans le moyen de calcul 15.

Au cours d'une deuxième étape 102, on commande les moyens d'alimentation 13 par l'intermédiaire des moyens de communication 14 de sorte que le moyen d'entrainement 12 soit alimenté. La rampe est alors mise en mouvement. On détermine l'instant de début de déplacement de la rampe 3 de capteurs comme l'instant de commande de l'alimentation du moyen d'entrainement 12. Dans un mode de réalisation particulier, on commande l'acquisition de mesures d'un capteur de courant configuré de sorte à mesurer le courant d'alimentation du moyen d'entrainement 12, et on détermine l'instant de début de déplacement de la rampe 3 de capteur lorsque le courant d'alimentation du moyen d'entrainement 12 dépasse un seuil de courant prédéterminé.

Au cours d'une troisième étape 103, on détermine si la durée de déplacement de la rampe 3 de capteurs est écoulée. La durée de déplacement de la rampe est égale au rapport de la longueur pouvant être parcourue par la rampe 3 de capteurs divisée par la vitesse moyenne de déplacement, déterminée par conception ou par essais et mémorisée dans les moyens de calcul 15. Lorsque tel est le cas, on commande les capteurs 3a de hauteur de sorte à interrompre leurs acquisitions. On prolonge ainsi l'autonomie de la batterie locale 3c.

Au cours d'une quatrième étape 104, on détermine la surface de plancher disponible et le volume disponible de la zone de chargement en réalisant les sous étapes suivantes.

Lors d'une sous-étape 104a, on détermine parmi les mesures reçues, celles dont la date est comprise entre la date de début de déplacement de la rampe et la date de fin de déplacement de la rampe égale à la somme de la date de début de déplacement de la rampe et de la durée de déplacement de la rampe.

Pour chaque mesure d'un capteur 3a de hauteur dont la date est comprise entre la date de début de déplacement de la rampe et la date de fin de déplacement de la rampe, on définit alors la coordonnée longitudinale x comme la distance entre la position du capteur lors de la mesure et le premier côté de la zone de chargement.

Dans un premier mode de réalisation, la coordonnée longitudinale x est déterminée comme étant égale à la vitesse de déplacement moyenne de la rampe 3 multipliée par la différence entre la date mémorisée et la date de début de déplacement de la rampe.

Dans autre un mode de réalisation, la coordonnée longitudinale x est déterminée comme étant égale à la somme de la mesure de profondeur du capteur de profondeur dirigé vers le premier côté de la zone de chargement et du décalage selon la direction longitudinale x entre l'objectif du capteur 3b de profondeur et l'objectif du capteur 3a de hauteur ayant réalisé la mesure.

Dans encore autre un mode de réalisation, la coordonnée longitudinale x est déterminée comme étant égale à la différence entre la profondeur de la zone de chargement et la somme de la mesure de profondeur et du décalage selon la direction longitudinale x entre l'objectif du capteur 3b de profondeur dirigé vers le côté opposé au premier côté de la zone de chargement et l'objectif du capteur 3a de hauteur ayant réalisé la mesure. On définit la profondeur de la zone de chargement comme la distance entre le premier côté de la zone de chargement et le côté opposé. Dans une remorque, les distances entre les côtés de la zone de chargement et les parois de la remorque doivent être pris en compte.

Il est à noter que ces modes de réalisation ne sont pas exclusifs et que les coordonnées longitudinales déterminées selon l'un des modes de réalisation ci-dessus mesures peuvent être confrontées entre-elles pour déterminer une valeur erronée, notamment par un mécanisme de vote à trois. Une robustesse supplémentaire concernant la détermination de la coordonnée longitudinale x est ainsi conférée au système de détermination 1.

On définit la coordonnée transverse y comme la distance entre le capteur de hauteur dont la mesure est traitée et le premier capteur 3a de hauteur de la rampe. Cette distance est connue par conception en fonction de l'espacement des capteurs 3a de hauteur sur la rampe 3. Par construction, la coordonnée transverse y du premier capteur 3a de la rampe est égal à zéro. Néanmoins, d'autres valeurs de la coordonnée transverse y du premier capteur peuvent être choisies. Ces valeurs doivent être prises en compte dans le calcul des coordonnées comme une valeur de décalage.

On définit la coordonnée de hauteur z comme la différence entre la hauteur de la zone de chargement moins la mesure de hauteur du capteur 3a de hauteur. Dans un mode de réalisation particulier, on détermine une coordonnée de hauteur z absolue en retranchant la distance entre l'objectif ou l'ouverture du capteur 3a de hauteur et la hauteur de la zone de chargement.

Pour les cargaisons conditionnées, on détermine la surface de plancher disponible et le volume disponible en réalisant les sous-étapes 104b à 104e suivantes.

Lors d'une sous-étape 104b, on détermine les points dont la coordonnée de hauteur z est inférieure à un seuil prédéterminé. Dans un mode de réalisation préférentiel, le seuil prédéterminé est inférieur à l'épaisseur d'une palette. On pourra également choisir, par praticité, la hauteur de levage définie précédemment et généralement égale à 10cm. La figure [Fig 11] illustre la cartographie de la disposition de cargaisons 50 résultant de cette détermination pour la disposition illustrée précédemment par la figure [Fig 5]. Chaque disque représente le point d'une mesure de hauteur par une capteur 3a de hauteur. On comprendra que le nombre et la disposition de ces mesures n'a pour but que d'illustrer la description de la détermination. D'autres nombres de mesures et d'autres motifs de mesures sont envisageables et font partie du périmètre de l'invention.

Dans un mode de réalisation particulier, on pourra tenir compte d'une taille minimale de cargaisons, supérieure à l'épaisseur de palette ou la hauteur de levage. C'est notamment le cas lorsque des futs ou des containers sont chargés dans la zone de chargement. On pourra alors choisir un seuil prédéterminé différent.

Dans un autre mode de réalisation, on pourra déterminer des surfaces d'occupation intermédiaires en comparant les coordonnées z à un deuxième seuil prédéterminé.

Lors d'une sous-étape 104c, on associe ensuite une surface élémentaire à chaque point dont la coordonnée est inférieure au seuil prédéterminé. Une surface élémentaire est égale au produit de la distance entre deux capteurs 3a de hauteur selon la direction transverse y et de la distance entre deux mesures successives selon la direction longitudinale x.

Lors d'une sous-étape 104d, on détermine la surface de plancher disponible en déterminant le nombre de points dont la coordonnée de hauteur z est inférieure au seuil prédéterminé et en multipliant ce nombre par la surface élémentaire.

Lors d'une sous-étape 104e, on détermine le volume disponible en multipliant la surface de plancher disponible par la hauteur de la zone de chargement.

On comprendra qu'à l'issue de ces étapes, on dispose simultanément de la surface de plancher disponible, du volume disponible et de la répartition des cargaisons dans la zone de chargement. Il est alors possible de réaliser une optimisation de placement des cargaisons à l'issue d'une reconnaissance de forme sur les surfaces de plancher libre.

Pour des cargaisons en vrac, on détermine le volume disponible en réalisant les sous-étapes suivantes.

A l'issue de la sous-étape 104a, le procédé se poursuit par une sous-étape 104f, au cours de laquelle on détermine le volume occupé par la cargaison en réalisant une intégration des hauteurs de chaque mesure selon la direction longitudinale x et la direction transverse y.

On détermine le volume disponible en soustrayant le volume occupé par la cargaison du volume total de la zone de chargement.

Le système de détermination et le procédé de commande ont été décrits ci-dessus en relation avec une rampe mobile. On comprendra que la rampe mobile peut présenter des fonctions supplémentaires, telle que le déploiement ou le retrait d'une couverture amovible. Dans certains modes de réalisation, les capteurs et éléments disposés sur la rampe mobile sont disposés sur un arceau de couverture amovible, de préférence, le premier arceau d'une couverture amovible. L'arceau de couverture amovible forme alors une rampe mobile au sens de la présente description. Les capteurs balayent alors la zone de chargement lorsque la couverture amovible est actionnée en ouverture ou en fermeture.

De même, on comprendra à la lecture de la description ci-dessus que les moyens de traitement peuvent être locaux, distants ou répartis entre des moyens locaux et distants.

Le système de détermination et le procédé de commande correspondant ont été décrits et illustrés pour la mesure de surface libre de plancher d'une zone de chargement, notamment dans une remorque de camion. Néanmoins, l'invention comprend la mesure de surface de plancher libre ou de volume libre d'une zone de chargement en absolu et dans un camion dépourvu de remorque, dans un avion, dans un navire ou dans tout véhicule muni d'une zone de chargement dans laquelle des marchandises sont déposées ou retirées.

Le système de détermination et le procédé de commande peuvent également être appliqués à des bâtiments tels que des centres logistiques ou des entrepôts.

De plus, il apparait clairement à la lecture de l'exposé ci-dessus que la détermination de surface de plancher libre ou de volume libre dans le cas de cargaisons en vrac est réalisée de façon totalement autonome sans nécessiter d'intervention humaine. L'invention comprend également un système de détermination et procédé de commande appliqués aux véhicules autonomes. Pour ces applications, on se réfèrera notamment à la demande de brevet français FR1759675 au nom de la demanderesse décrivant l'actionnement d'une couverture amovible en fonction de la position GPS d'un véhicule. On se réfèrera également à la demande de brevet FR 1759676 également au nom de la demanderesse décrivant la détermination et la transmission de la surface de plancher occupé et du volume occupé dans un véhicule et son reroutage en fonction d'une part des données reçues et d'autre part de cargaisons compatibles avec la position du véhicule, la surface de plancher libre et/ou le volume libre.

## Revendications

1. Système de détermination de la surface de plancher libre d'une zone de chargement (2), comprenant des moyens d'entrainement (12), des moyens de communication (14), des moyens de traitement (15) et une rampe mobile (3) sur laquelle sont disposés des capteurs (3a) de hauteur dirigés vers le plancher de la zone de chargement (2) selon une incidence normale et alignés entre eux à une hauteur constante dudit plancher, la rampe mobile (3) étant conçue de sorte à s'étendre selon une première direction au-dessus de la zone de chargement et étant configurée de sorte à se déplacer au-dessus de la zone de chargement (2) sous l'effet des moyens d'entrainement (12) selon une deuxième direction, les moyens de traitement (15) étant configurés pour déterminer au moins la surface libre de plancher de la zone de chargement (2) en fonction des données reçues des capteurs (3a) de hauteur par l'intermédiaire des moyens de communication (12).

2. Système de détermination selon la revendication 1, dans lequel la rampe mobile (3) est munie d'au moins un capteur (3b) de profondeur, alimenté par les moyens d'alimentation (13), et configuré pour déterminer la distance au côté opposé de la zone de chargement, les moyens de communication (14) comprennent une connexion avec chaque capteur (3b) de profondeur.

3. Système de détermination selon l'une quelconque des revendications 1 ou 2, dans lequel les moyens de communication (14) comprennent une connexion sans fil avec un moyen local de stockage de données disposé sur la rampe mobile et connecté aux capteurs de hauteur (3a) et, lorsqu'ils sont présents, aux capteurs de profondeur (3b), de sorte à transmettre les données acquises par les capteurs lorsque la rampe mobile (3) a terminé de balayer la zone de chargement (2).

4. Système de détermination selon l'une quelconque des revendications 1 à 3, dans lequel les capteurs (3a) de hauteur et les capteurs (3b) de profondeur sont des capteurs de distance à faible angle d'ouverture, de préférence des LIDARs.

5. Système de détermination selon l'une quelconque des revendications 1 à 4, dans lequel les moyens d'entrainement comprennent au moins deux cordes (5a,5b) circulant chacune sur une poulie d'extrémité (6a,6b), vers une poulie de tension (8a,8b) par l'intermédiaire d'une poulie de renvoi d'angle (7a,7b), la deuxième corde (5b) étant croisée par l'intermédiaire d'une poulie intermédiaire (10), les deux cordes étant mises en mouvement par l'intermédiaire d'un galet d'entrainement (11) mis en rotation par un moyen d'entrainement (12).

6. Système de détermination selon l'une quelconque des revendications 1 à 5, muni de moyens d'alimentation (13) comprenant une batterie alimentant les moyens d'entrainement (12), les moyens de communication (14) et les moyens de traitement (15), une batterie locale (3c) disposée sur la rampe mobile (3) et un système de transmission de puissance sans contact configuré pour recharger la batterie locale (3c) de la rampe mobile (3), la batterie locale (3c) étant configurée pour alimenter les capteurs (3a) de hauteur ainsi que les capteurs (3b) de profondeur lorsque le système de détermination en est muni.

7. Système de détermination selon l'une quelconque des revendications 1 à 6, dans lequel la zone de chargement (2) est située dans un camion, dans la benne d'un camion, dans une remorque d'un camion, dans un navire, dans un wagon ferroviaire, dans un aéronef, ou dans un bâtiment.

8. Procédé de commande d'un système de détermination selon l'une quelconque des revendication 1 à 7, comprenant les étapes suivantes :
a. on commande les capteurs (3a) de hauteur de sorte à réaliser l'acquisition de mesures,
b. on date chaque mesure reçue en fonction d'une horloge interne,
c. on commande le moyen d'entrainement (12) de sorte que la rampe se mette en mouvement et on mémorise l'instant de début de déplacement de la rampe (3),
d. on détermine parmi les mesures reçues, celles dont la date est comprise entre la date de début de déplacement de la rampe et la date de fin de déplacement de la rampe égale à la somme de la date de début de déplacement de la rampe et de la durée de déplacement de la rampe,
e. Pour chaque mesure d'un capteur (3a) de hauteur, on définit alors une coordonnée longitudinale comme la position longitudinale du capteur au moment de la mesure, on définit la coordonnée transverse comme la distance entre le capteur de hauteur dont la mesure est traitée et le premier capteur 3a de hauteur de la rampe et on définit la coordonnée de hauteur comme la différence entre la hauteur sous plafond de la remorque moins la mesure de hauteur du capteur (3a) de hauteur,
f. on détermine la surface de plancher libre dans la zone de chargement et au moins l'un parmi le volume libre dans la zone de chargement, la surface de plancher occupée dans la zone de chargement, le volume occupé dans la zone de chargement, une cartographie de la surface de plancher libre comme une image fonction des points dont la coordonnée de hauteur est inférieure à un seuil prédéterminé, ou une cartographie de la surface de plancher occupée comme une image fonction des points dont la coordonnée de hauteur est supérieure audit seuil prédéterminé.

9. Procédé de commande selon la revendication 8, dans lequel on détermine la position longitudinale d'un capteur à une date mémorisée comme la vitesse de déplacement moyenne de la rampe (3) multipliée par la différence entre la date mémorisée et la date de début de déplacement de la rampe.

10. Procédé de commande selon la revendication 8, dans lequel on commande au moins un capteur (3b) de profondeur de sorte à réaliser l'acquisition de mesures et on détermine la position longitudinale d'un capteur en fonction de la mesure de distance d'un premier capteur (3b) de profondeur dirigé vers un côté de la zone de chargement normal à la direction de déplacement de la rampe mobile (3).

11. Procédé de commande selon l'une quelconque des revendications 8 à 10, dans lequel on détermine l'instant de début de déplacement de la rampe (3) de capteurs comme l'instant de commande des moyens d'alimentation (13) afin d'alimenter le moyen d'entrainement (12).

12. Procédé de commande selon l'un quelconque des revendications 8 à 11, dans lequel on commande l'acquisition de mesures d'un capteur de courant configuré de sorte à mesurer le courant d'alimentation du moyen d'entrainement (12), et on détermine l'instant de début de déplacement de la rampe (3) de capteur lorsque le courant d'alimentation du moyen d'entrainement (12) dépasse un seuil de courant prédéterminé.

13. Procédé de commande selon l'un quelconque des revendications 8 à 12, dans lequel, pour des cargaisons conditionnées,
a. on associe une surface élémentaire à chaque point dont la coordonnée de hauteur est inférieure au seuil prédéterminé, la surface élémentaire étant égale au produit de la distance entre deux capteurs (3a) de hauteur selon une première direction normale au déplacement de la rampe mobile (3) et de la distance entre deux mesures successives selon une deuxième direction colinéaire au déplacement de la rampe mobile (3), puis
b. on détermine la surface de plancher disponible en sommant les surfaces élémentaires, et
c. on détermine le volume disponible en multipliant la surface de plancher disponible par la hauteur de la zone de chargement.

14. Procédé de commande selon l'un quelconque des revendications 8 à 12, dans lequel, pour des cargaisons conditionnées,
a. on détermine une surface élémentaire englobant plusieurs points de mesure, on moyenne les mesures sur chaque surface élémentaire, on détermine les surfaces élémentaires pour lesquelles la coordonnée de hauteur moyenne est inférieure au seuil prédéterminé, puis
b. on détermine la surface de plancher disponible en sommant les surfaces élémentaires pour lesquelles la coordonnée de hauteur moyenne est inférieure au seuil prédéterminé, et
c. on détermine le volume disponible en multipliant la surface de plancher disponible par la hauteur de la zone de chargement.

15. Procédé de commande selon l'un quelconque des revendications 8 à 14, dans lequel le seuil prédéterminé est défini comme étant inférieur à une taille minimale des cargaisons.

16. Procédé de commande selon l'un quelconque des revendications 8 à 12, dans lequel, pour des cargaisons en vrac, on détermine le volume disponible comme le volume de la zone de chargement moins le volume occupé par la cargaison déterminé par intégration des mesures de capteur (3a) de hauteur selon la première direction et selon la deuxième direction.

17. Procédé de commande selon l'un quelconque des revendications 8 à 16, dans lequel on détermine une surface de plancher occupé ou un volume occupé en fonction des points de mesure dont la coordonnée de hauteur est supérieure au seuil prédéterminé.

## Patentansprüche

1. System zur Bestimmung der freien Bodenfläche eines Ladebereichs (2), umfassend Antriebsmittel (12), Kommunikationsmittel (14), Verarbeitungsmittel (15) und eine bewegliche Rampe (3), an der Höhensensoren (3a) angeordnet sind, die senkrecht auf den Boden des Ladebereichs (2) gerichtet sind und auf eine konstante Höhe des Bodens ausgerichtet sind, wobei die bewegliche Rampe (3) so ausgebildet ist, dass sie sich in einer ersten Richtung über den Ladebereich erstreckt, und so eingerichtet ist, dass sie sich unter der Wirkung der Antriebsmittel (12) in einer zweiten Richtung über den Ladebereich (2) bewegt, wobei die Verarbeitungsmittel (15) so eingerichtet sind, dass sie mindestens die freie Bodenfläche des Ladebereichs (2) in Abhängigkeit von den von den Höhensensoren (3a) über die Kommunikationsmittel (12) empfangenen Daten bestimmen.

2. Bestimmungssystem nach Anspruch 1, wobei die bewegliche Rampe (3) mit mindestens einem Tiefensensor (3b) versehen ist, der von den Versorgungsmitteln (13) versorgt wird und so eingerichtet ist, dass er den Abstand zu der gegenüberliegenden Seite des Ladebereichs bestimmt, wobei die Kommunikationsmittel (14) eine Verbindung mit jedem Tiefensensor (3b) umfassen.

3. Bestimmungssystem nach einem der Ansprüche 1 oder 2, wobei die Kommunikationsmittel (14) eine drahtlose Verbindung mit einem lokalen Datenspeichermittel umfassen, das an der beweglichen Rampe angeordnet und mit den Höhensensoren (3a) und, wenn vorhanden, mit den Tiefensensoren (3b) verbunden ist, so dass die von den Sensoren erfassten Daten übertragen werden, wenn die bewegliche Rampe (3) das Abtasten des Ladebereichs (2) abgeschlossen hat.

4. Bestimmungssystem nach einem der Ansprüche 1 bis 3, wobei die Höhensensoren (3a) und die Tiefensensoren (3b) Abstandssensoren mit geringem Öffnungswinkel sind, vorzugsweise LIDARs.

5. Bestimmungssystem nach einem der Ansprüche 1 bis 4, wobei die Antriebsmittel mindestens zwei Seile (5a, 5b) umfassen, die jeweils über eine Endrolle (6a, 6b) zu einer Spannrolle (8a, 8b) über eine Winkelumlenkrolle (7a, 7b) verlaufen, wobei das zweite Seil (5b) über eine Zwischenrolle (10) gekreuzt wird, wobei die beiden Seile über eine Antriebsrolle (11) in Bewegung gesetzt werden, die durch ein Antriebsmittel (12) in Drehung versetzt wird.

6. Bestimmungssystem nach einem der Ansprüche 1 bis 5, das mit Versorgungsmitteln (13) ausgestattet ist, die eine Batterie umfassen, die die Antriebsmittel (12), die Kommunikationsmittel (14) und die Verarbeitungsmittel (15) versorgt, eine lokale Batterie (3c), die an der beweglichen Rampe (3) angeordnet ist, und ein kontaktloses Leistungsübertragungssystem, das so eingerichtet ist, dass es die lokale Batterie (3c) der beweglichen Rampe (3) auflädt, wobei die lokale Batterie (3c) so eingerichtet ist, dass es die Höhensensoren (3a) sowie die Tiefensensoren (3b) versorgt, wenn das Bestimmungssystem damit ausgestattet ist.

7. Bestimmungssystem nach einem der Ansprüche 1 bis 6, wobei sich der Ladebereich (2) in einem LKW, in der Ladefläche eines LKW, in einem Anhänger eines LKW, in einem Schiff, in einem Eisenbahnwaggon, in einem Flugzeug oder in einem Gebäude befindet.

8. Verfahren zur Steuerung eines Bestimmungssystems nach einem der Ansprüche 1 bis 7, umfassend die folgenden Schritte:
a. Steuern der Höhensensoren (3a), so dass sie Messungen erfassen,
b. Datieren jeder empfangenen Messung anhand einer internen Uhr,
c. Steuern des Antriebsmittels (12), so dass sich die Rampe in Bewegung setzt, und Speichern des Zeitpunkts des Bewegungsbeginns der Rampe (3),
d. Bestimmen derjenigen unter den empfangenen Messungen, deren Datum zwischen dem Datum des Beginns der Bewegung der Rampe und dem Datum des Endes der Bewegung der Rampe liegt, das der Summe des Datums des Beginns der Bewegung der Rampe und der Bewegungsdauer der Rampe entspricht,
e. für jede Messung eines Höhensensors (3a), Definieren einer Längskoordinate als die Längsposition des Sensors zum Zeitpunkt der Messung, Definieren der Querkoordinate als der Abstand zwischen dem Höhensensor, dessen Messung verarbeitet wird, und dem ersten Höhensensor 3a der Rampe und Definieren der Höhenkoordinate als die Differenz zwischen der Deckenhöhe des Anhängers minus der Höhenmessung des Höhensensors (3a),
f. Bestimmen der freien Bodenfläche im Ladebereich und mindestens eines von dem freien Volumen im Ladebereich, der belegten Bodenfläche im Ladebereich, dem belegten Volumen im Ladebereich, einer Kartierung der freien Bodenfläche als Bildfunktion der Punkte, deren Höhenkoordinate unter einem vorbestimmten Schwellenwert liegt, oder einer Kartierung der belegten Bodenfläche als Bildfunktion der Punkte, deren Höhenkoordinate über dem vorbestimmten Schwellenwert liegt.

9. Steuerungsverfahren nach Anspruch 8, wobei die Längsposition eines Sensors zu einem gespeicherten Datum als die durchschnittliche Bewegungsgeschwindigkeit der Rampe (3) multipliziert mit der Differenz zwischen dem gespeicherten Datum und dem Startdatum der Bewegung der Rampe bestimmt wird.

10. Steuerungsverfahren nach Anspruch 8, wobei mindestens ein Tiefensensor (3b) so gesteuert wird, dass die Erfassung von Messungen durchgeführt wird und die Längsposition eines Sensors in Abhängigkeit von der Abstandsmessung eines ersten Tiefensensors (3b) bestimmt wird, der zu einer Seite des Ladebereichs gerichtet ist, die senkrecht zur Bewegungsrichtung der beweglichen Rampe (3) ist.

11. Steuerungsverfahren nach einem der Ansprüche 8 bis 10, wobei der Zeitpunkt des Beginns der Bewegung der Sensorrampe (3) als der Zeitpunkt der Steuerung der Versorgungsmittel (13) bestimmt wird, um das Antriebsmittel (12) zu versorgen.

12. Steuerungsverfahren nach einem der Ansprüche 8 bis 11, wobei das Erfassen von Messungen eines Stromsensors gesteuert wird, der so eingerichtet ist, dass er den Versorgungsstrom des Antriebsmittels (12) misst, und der Zeitpunkt des Beginns der Bewegung der Sensorrampe (3) bestimmt wird, wenn der Versorgungsstrom des Antriebsmittels (12) einen vorbestimmten Stromschwellenwert überschreitet.

13. Steuerungsverfahren nach einem der Ansprüche 8 bis 12, wobei für verpackte Ladungen
a. jedem Punkt, dessen Höhenkoordinate kleiner als der vorbestimmte Schwellenwert ist, eine elementare Fläche zugeordnet wird, wobei die elementare Fläche gleich dem Produkt aus dem Abstand zwischen zwei Höhensensoren (3a) in einer zur Bewegung der beweglichen Rampe (3) senkrechten ersten Richtung und dem Abstand zwischen zwei aufeinanderfolgenden Messungen in einer zur Bewegung der beweglichen Rampe (3) kollinearen zweiten Richtung ist, dann
b. die verfügbare Bodenfläche durch Addition der elementaren Flächen bestimmt wird, und
c. das verfügbare Volumen bestimmt wird, indem die verfügbare Bodenfläche mit der Höhe der Ladefläche multipliziert wird.

14. Steuerungsverfahren nach einem der Ansprüche 8 bis 12, wobei für verpackte Ladungen
a. eine elementare Fläche bestimmt wird, die mehrere Messpunkte umfasst, die Messungen auf jeder elementaren Fläche gemittelt werden, die elementaren Flächen bestimmt werden, für die die mittlere Höhenkoordinate unter dem vorbestimmten Schwellenwert liegt, und dann
b. die verfügbare Bodenfläche bestimmt wird, indem die elementaren Flächen addiert werden, für die die mittlere Höhenkoordinate kleiner als der vorbestimmte Schwellenwert ist, und
c. das verfügbare Volumen bestimmt wird, indem die verfügbare Bodenfläche mit der Höhe der Ladefläche multipliziert wird.

15. Steuerungsverfahren nach einem der Ansprüche 8 bis 14, wobei der vorbestimmte Schwellenwert als kleiner als eine Mindestgröße der Ladungen definiert ist.

16. Steuerungsverfahren nach einem der Ansprüche 8 bis 12, wobei für Schüttgüter das verfügbare Volumen als das Volumen des Ladebereichs abzüglich des von der Ladung belegten Volumens bestimmt wird, das durch Integration der Messungen des Höhensensors (3a) in der ersten Richtung und in der zweiten Richtung bestimmt wird.

17. Steuerungsverfahren nach einem der Ansprüche 8 bis 16, wobei eine belegte Bodenfläche oder ein belegtes Volumen in Abhängigkeit von den Messpunkten bestimmt wird, deren Höhenkoordinate größer als der vorbestimmte Schwellenwert ist.

## Claims

1. System for determining the free floor area of a loading zone (2), comprising drive means (12), communication means (14), processing means (15) and a moving beam (3) on which height sensors (3a) are arranged that are directed towards the floor of the loading zone (2) at normal incidence and aligned with one another at a constant height from said floor, the moving beam (3) being designed so as to extend in a first direction above the loading zone and being configured so as to move above the loading zone (2) when driven by the drive means (12) in a second direction, the processing means (15) being configured to determine at least the free floor area of the loading zone (2) according to the data received from the height sensors (3a) via the communication means (12).

2. Determination system according to claim 1, wherein the moving beam (3) is provided with at least one depth sensor (3b), powered by the power supply means (13), and configured to determine the distance on the opposite side of the loading zone, the communication means (14) comprise a connection to each depth sensor (3b).

3. Determination system according to either claim 1 or claim 2, wherein the communication means (14) comprise a wireless connection with a local data storage means arranged on the moving beam and connected to the height sensors (3a) and, when present, to the depth sensors (3b), so as to transmit data acquired by the sensors when the moving beam (3) has completed scanning the loading zone (2).

4. Determination system according to any one of claims 1 to 3, wherein the height sensors (3a) and the depth sensors (3b) are small aperture angle distance sensors, preferably LIDARs.

5. Determination system according to any one of claims 1 to 4, wherein the drive means comprise at least two ropes (5a, 5b) each running along an end pulley (6a, 6b), towards a tension pulley (8a, 8b) by means of an angle return pulley (7a, 7b), the second rope (5b) being crossed by means of an intermediate pulley (10), the two ropes being set in motion by means of a drive roller (11) rotated by a drive means (12).

6. Determination system according to any one of claims 1 to 5, provided with power supply means (13) comprising a battery supplying power to the drive means (12), the communication means (14) and the processing means (15), a local battery (3c) arranged on the moving beam (3) and a contactless power transmission system configured to recharge the local battery (3c) of the moving beam (3), the local battery (3c) being configured to supply power to the height sensors (3a) and depth sensors (3b) when the determination system is provided with it.

7. Determination system according to any one of claims 1 to 6, wherein the loading zone (2) is located in a truck, in a truck hopper, in a truck trailer, in a ship, in a railway car, in an aircraft, or in a building.

8. Control method for a determination system according to any one of claims 1 to 7, comprising the following steps:
a. the height sensors (3a) are controlled so as to acquire measurements,
b. each measurement received is dated according to an internal clock,
c. the drive means (12) is controlled so that the beam starts to move and the start time of movement of the beam (3) is stored,
d. among the received measurements, those whose date is between the start date of movement of the beam and the end date of movement of the beam equal to the sum of the start date of movement of the beam and the duration of movement of the beam, are determined,
e. for each measurement of a height sensor (3a), a longitudinal coordinate is then defined as the longitudinal position of the sensor at the time of the measurement, the transverse coordinate is defined as the distance between the height sensor whose measurement is processed and the first height sensor (3a) of the beam and the height coordinate is defined as the difference between the ceiling height of the trailer minus the height measurement of the height sensor (3a),
f. the free floor area is determined in the loading zone and at least one of the free volume in the loading zone, the occupied floor area in the loading zone, the occupied volume in the loading zone, a mapping of the free floor area as an image according to the points of which the height coordinate is less than a predetermined threshold, or a mapping of the occupied floor area as an image according to the points of which the height coordinate is greater than said predetermined threshold.

9. Control method according to claim 8, wherein the longitudinal position of a sensor on a stored date is determined as the average moving speed of the beam (3) multiplied by the difference between the stored date and the start date of movement of the beam.

10. Control method according to claim 8, wherein at least one depth sensor (3b) is controlled so as to acquire measurements and the longitudinal position of a sensor is determined according to the distance measurement of a first depth sensor (3b) directed towards a side of the loading zone normal to the direction of movement of the moving beam (3).

11. Control method according to any one of claims 8 to 10, wherein the start time of movement of the sensor beam (3) is determined as the time at which the power supply means (13) are controlled in order to supply power to the drive means (12).

12. Control method according to any one of claims 8 to 11, wherein the measurement acquisition of a current sensor configured so as to measure the power supply current of the drive means (12) is controlled, and the start time of movement of the sensor beam (3) is determined when the power supply current of the drive means (12) exceeds a predetermined current threshold.

13. Control method according to any one of claims 8 to 12, wherein, for packaged cargoes,
a. an elementary area is associated with each point whose height coordinate is less than the predetermined threshold, the elementary area being equal to the product of the distance between two height sensors (3a) in a first direction normal to the movement of the moving beam (3) and the distance between two successive measurements in a second direction collinear to the movement of the moving beam (3), then
b. the available floor area is determined by adding up the elementary areas, and
c. the available volume is determined by multiplying the available floor area by the height of the loading zone.

14. Control method according to any one of claims 8 to 12, wherein, for packaged cargoes,
a. an elementary area including a plurality of measurement points is determined, measurements are averaged over each elementary area, the elementary areas for which the average height coordinate is less than the predetermined threshold are determined, then
b. the available floor area is determined by adding up the elementary areas for which the average height coordinate is less than the predetermined threshold, and
c. the available volume is determined by multiplying the available floor area by the height of the loading zone.

15. Control method according to any one of claims 8 to 14, wherein the predetermined threshold is defined as being less than a minimum size of the cargoes.

16. Control method according to any one of claims 8 to 12, wherein, for bulk cargoes, the available volume can be determined as the volume of the loading zone minus the volume occupied by the determined cargo by integrating the height sensor (3a) measurements in the first direction and in the second direction.

17. Control method according to any one of claims 8 to 16, wherein an occupied floor area or an occupied volume are determined depending on measurement points whose height coordinate is greater than the predetermined threshold.
